# EUROPÄISCHE PATENTSCHRIFT

(11) **EP 1 371 872 B1**
(45) Veröffentlichungstag und Bekanntmachung des Hinweises auf die Patenterteilung: **14.06.2006**
(21) Anmeldenummer: 03010752.8
(22) Anmeldetag: 14.05.2003
(51) Int. Cl.: F16F 9/05, F16F 9/38

(54) **Luftfederanordnung**
Air spring arrangement
Arrangement de ressort pneumatique

(30) Priorität: 11.06.2002 DE 10225986
(43) Veröffentlichungstag der Anmeldung: 17.12.2003
(73) Patentinhaber: Carl Freudenberg KG, 69465 Weinheim (DE)
(72) Erfinder: Lühmann, Cord, Dipl.-Ing., 21614 Buxtehude (DE); Götz, Harald, 21149 Hamburg (DE)
(74) Vertreter: Mattausch, Klaus

(56) Entgegenhaltungen:
- DE-A- 10 004 122
- DE-A- 10 007 153
- DE-A- 19 753 637
- US-A- 4 715 588
- US-A- 4 718 649

## Beschreibung

Die Erfindung betrifft eine Luftfederanordnung, bestehend wenigstens aus:
- einem Deckel und Kolben;
- einem Luftfederbalg aus elastomerem Werkstoff, der mit einem eingebetteten Festigkeitsträger versehen ist, wobei die beiden Balgenden am Deckel einerseits und am Kolben andererseits befestigt sind, wodurch der Luftfederbalg eine volumenelastische Luftkammer einschließt, wobei ferner der Luftfederbalg eine Schlaufe ausbildet, die an der Außenwand des Kolbens abrollen kann; sowie
- einer Schutzmanschette, die den Luftfederbalg umgibt.

Eine gattungsgemäße Luftfederanordnung findet im Fahrzeugbau (PKW, Nutz- und Schienenfahrzeuge) eine breite Anwendung, wobei insbesondere auf die Druckschriften DE 1 816 597 U1 und FR 2 093 448 A verwiesen wird.

Neben den oben genannten Grundbauteilen kann die Luftfederanordnung noch mit einem Schwingungsdämpfer (Stoßdämpfer) ausgestattet sein. Eine derartige Luftfederanordnung wird auch als Luftfederbein bezeichnet. Hinsichtlich des diesbezüglichen Standes der Technik wird insbesondere auf die Druckschriften DE 197 53 637 A1 und DE 100 41 927 A1 verwiesen.

Aus der US 4,715,588 A ist ein Luftfederbalg bekannt, der auf den Außenflächen seiner axialen, ringförmigen Endbereiche Rippen aufweist.

Nach dem Stand der Technik sind Luftfederbälge mit einer gleichmäßigen Struktur an ihrer Außenoberfläche versehen. Bedingt durch das gewählte Herstellungsverfahren können glatte oder raue Oberflächen entstehen.

Kommt ein Luftfederbalg in Form eines Axialbalges (DE 36 43 073 A1) zum Einsatz, so ist dieser üblicherweise mit einer Außenführung aus Metall oder einem biegesteifen Kunststoff versehen. Zum Schutz der Schlaufe (Rollfalte) kann zusätzlich eine Schutzmanschette vorgesehen sein.

Bei Luftfederanordnungen unter Einsatz von Kreuzlagenbälgen wird jedoch zumeist auf eine Außenführung verzichtet, wobei im Folgenden näher auf den Stand der Technik nicht außen geführter Luftfederbälge eingegangen wird.

Insbesondere im Kfz-Bereich mit Schwerpunkt PKW-Sektor ist es aufgrund der geringen Wandstärken von Kreuzlagenbälgen notwendig geworden, eine Schutzmanschette als Schmutzschutz vorzusehen. Unumgänglich ist eine derartige Schutzmanschette bei Luftfederanordnungen, bei denen der Kolben mit der korrespondierenden Schlaufe als oberes Bauteil mit der Karosserie verbunden ist.

Bedingt durch die Achskinematik, die sehr engen Bauraumbedingungen und die Einflussfaktoren im Fahrteinsatz sind die Abstände zwischen der Schutzmanschette und der Außenoberfläche des Luftfederbalges sehr gering oder zum Teil nicht mehr vorhanden. Es kommt zu einer Berührung von Schutzmanschette und Luftfederbalg.

Durch die Berührung dieser Bauteile kommt es bei Federvorgängen zu Reibung und somit über die Lebensdauer des Artikels zu einer Oberflächenbeschädigung der Schutzmanschette oder des Luftfederbalges. Diese Beschädigung durch Reibung soll vermieden bzw. vermindert werden, da sie wesentlich die Lebensdauer des Luftfederbalges und/oder der Schutzmanschette beeinflusst. Der Lehre der vorliegenden Patentanmeldung liegt die Aufgabe zu Grunde, eine Luftfederanordnung zu realisieren, welche bei problemloser Fertigung geringen Verschleißerscheinungen unterliegt.

Die genannte Aufgabe wird durch die Merkmale des Patentanspruchs 1 gelöst. Danach ist die eingangs genannte Luftfederanordnung dadurch gekennzeichnet, dass der Luftfederbalg als Kreuzlagenbalg ausgebildet ist, dessen Außenoberfläche innerhalb des Kontaktbereichs zur Schutzmanschette umlaufend mit einer Struktur versehen ist, die einen Abstand zwischen dem Luftfederbalg und der Schutzmanschette gewährleistet.

Zweckmäßige Ausgestaltungen der Erfindung sind in den Patentansprüchen 2 bis 5 genannt.

Die Erfindung wird nun anhand eines Ausführungsbeispieles unter Bezugnahme auf eine schematische Zeichnung erläutert.

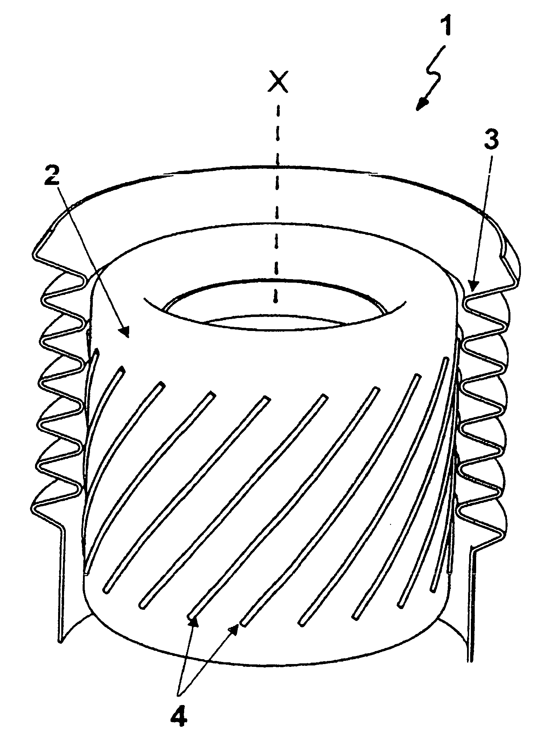

Die Abbildung zeigt eine Luftfederanordnung **1** mit Luftfederbalg **2** und Schutzmanschette **3**. Die beiden Balgenden des Luftfederbalges sind am Deckel einerseits und am Kolben (Abrollkoben, Tauchkolben) andererseits befestigt, wodurch der Luftfederbalg eine volumenelastische Luftkammer einschließt. Der Luftfederbalg bildet bei der Einfederung eine Schlaufe (dynamischer Bereich des Luftfederbalges), die an der Außenwand des Kolbens abrollen kann. Eines der Bauteile, insbesondere der Kolben, ist ortsfest an der Karosserie befestigt. Das andere Bauteil, insbesondere der Deckel, ist fest mit dem Lenker der Achse (Fahrwerksanbindung) verbunden.

Der Luftfederbalg **2** aus elastomerem Werkstoff ist mit einem eingebetteten Festigkeitsträger in Form eines Kreuzlagenbalges versehen. Die Schutzmanschette **3** besteht aus einem elastomeren Werkstoff, einem thermoplastischen Elastomeren (TPE), einem thermoplastischen Kunststoff oder einem textilen Werkstoff. Die Schutzmanschette umfasst einen faltenförmigen wie auch ebenflächigen Bereich.

Die Außenoberfläche des Luftfederbalges ist innerhalb des Kontaktbereiches der Schutzmanschette **3** umlaufend mit einer Struktur **4** versehen, die einen Abstand zwischen dem Luftfederbalg und der Schutzmanschette gewährleistet. Die Struktur ist durch Erhebungen gebildet, die im Wesentlichen eine einzige Erstreckungsrichtung aufweisen. Die Erhebungen verlaufen hier schräg zur Achsrichtung X des Luftfederbalges, wobei die Erhebungen nahezu im gleichen Abstand zueinander angeordnet sind.

Durch die neuartige Struktur der Außenoberfläche des Luftfederbalges wird die beim Kontakt auftretende Reibfläche zwischen den Bauteilen verringert. Der Kontakt zwischen den Bauteilen, der in extremen Aus- und Einfederpositionen verstärkt auftritt, findet nur noch punktuell statt und ein Gleiten wird erleichtert. Mit diesem Strukturprinzip wird somit vermieden, dass funktionsrelevante Elemente des Kreuzlagenbalges oder der Schutzmanschette über die notwendige Lebensdauer beschädigt werden. Die nicht funktionsrelevante Struktur auf dem Kreuzlagenbalg wird über die Lebensdauer geopfert und andere wichtige Funktionsbereiche der Bauteile werden geschützt.

## Patentansprüche

1. Luftfederanordnung (1), bestehend wenigstens aus einem Deckel und Kolben; einem Luftfederbalg (2) aus elastomerem Werkstoff, der mit einem eingebetteten Festigkeitsträger versehen ist, wobei die beiden Balgenden am Deckel einerseits und am Kolben andererseits befestigt sind, wodurch der Luftfederbalg eine volumenelastische Luftkammer einschließt, wobei ferner der Luftfederbalg eine Schlaufe ausbildet, die an der Außenwand des Kolbens abrollen kann, sowie einer Schutzmanschette (3), die den Luftfederbalg (2) umgibt, **dadurch gekennzeichnet, dass** der Luftfederbalg (2) als Kreuzlagenbalg ausgebildet ist, dessen Außenoberfläche innerhalb des Kontaktbereichs zur Schutzmanschette (3) umlaufend mit einer Struktur (4) versehen ist, die einen Abstand zwischen dem Luftfederbalg (2) und der Schutzmanschette (3) gewährleistet.

2. Luftfederanordnung nach Anspruch 1, **dadurch gekennzeichnet, dass** die Struktur (3) durch Erhebungen gebildet ist.

3. Luftfederanordnung nach Anspruch 2, **dadurch gekennzeichnet, dass** die Erhebungen im Wesentlichen eine einzige Erstreckungsrichtung aufweisen.

4. Luftfederanordnung nach Anspruch 3, **dadurch gekennzeichnet, dass** die Erhebungen parallel oder schräg zur Achsrichtung (X) des Luftfederbalgs (2) verlaufen.

5. Luftfederanordnung nach Anspruch 3 oder 4, **dadurch gekennzeichnet, dass** die Erhebungen nahezu im gleichen Abstand zueinander angeordnet sind.

## Claims

1. Air spring arrangement (1), comprising at least a cover and a piston, comprising an air spring bellows (2) made of elastomeric material and provided with an embedded strength member, the two bellows ends being fastened to the cover on the one hand and to the piston on the other hand, whereby the air spring bellows encloses a volume-elastic air chamber, the air spring bellows additionally forming a loop which can unwind on the outer wall of the piston, and further comprising a protective sleeve (3) which surrounds the air spring bellows (2), **characterized in that** the air spring bellows (2) is configured as a cross-layered bellows, the outer surface of which, within the contact region to the protective sleeve (3), is provided all the way round with a structure (4) which ensures a spacing between the air spring bellows (2) and the protective sleeve (3).

2. Air spring arrangement according to Claim 1, **characterized in that** the structure (3) is formed by elevations.

3. Air spring arrangement according to Claim 2, **characterized in that** the elevations essentially have a single direction of extent.

4. Air spring arrangement according to Claim 3, **characterized in that** the elevations run parallel or obliquely to the axial direction (X) of the air spring bellows (2).

5. Air spring arrangement according to Claim 3 or 4, **characterized in that** the elevations are disposed virtually at an equal distance apart.

## Revendications

1. Arrangement de ressort pneumatique (1), constitué d'au moins un couvercle et un piston, d'un soufflet de ressort pneumatique (2) en matériau élastomère qui est muni d'un renforcement incorporé, les deux extrémités du soufflet étant fixées d'une part au couvercle et d'autre part au piston, le soufflet de ressort pneumatique incluant une chambre d'air de volume élastique, le soufflet de ressort pneumatique formant en outre une boucle qui peut rouler sur la paroi extérieure du piston, ainsi qu'une manchette de protection (3) qui entoure le soufflet de ressort pneumatique (2), **caractérisé en ce que** le soufflet de ressort pneumatique (2) est réalisé sous la forme d'un soufflet à couches de support croisées dont la surface extérieure est pourvue sur la périphérie à l'intérieur de la région de contact avec la manchette de protection (3), d'une structure (4) qui assure un espacement entre le soufflet de ressort pneumatique (2) et la manchette de protection (3).

2. Arrangement de ressort pneumatique selon la revendication 1, **caractérisé en ce que** la structure (3) est formée par des rehaussements.

3. Arrangement de ressort pneumatique selon la revendication 2, **caractérisé en ce que** les rehaussements présentent essentiellement une direction d'étendue unique.

4. Arrangement de ressort pneumatique selon la revendication 3, **caractérisé en ce que** les rehaussements s'étendent parallèlement ou obliquement par rapport à la direction de l'axe (X) du soufflet de ressort pneumatique (2).

5. Arrangement de ressort pneumatique selon la revendication 3 ou 4, **caractérisé en ce que** les rehaussements sont disposés pratiquement à égale distance les uns des autres.
